(19) Europäisches Patentamt
European Patent Office
Office européen des brevets

(11) Veröffentlichungsnummer: **0 165 558**
**B1**

(12) # EUROPÄISCHE PATENTSCHRIFT

(45) Veröffentlichungstag der Patentschrift: **30.08.89**

(51) Int. Cl.$^4$: **C 09 D 5/44**

(21) Anmeldenummer: **85107308.0**

(22) Anmeldetag: **13.06.85**

(54) **Überzugsmittel, ihre Herstellung und Verwendung.**

(30) Priorität: **16.06.84 DE 3422509**

(43) Veröffentlichungstag der Anmeldung: **27.12.85 Patentblatt 85/52**

(45) Bekanntmachung des Hinweises auf die Patenterteilung: **30.08.89 Patentblatt 89/35**

(84) Benannte Vertragsstaaten: **AT BE CH DE FR GB IT LI NL SE**

(56) Entgegenhaltungen:
**FR-A- 2 208 953**
**GB-A- 1 172 916**
**US-A- 3 971 708**

(73) Patentinhaber: **BASF Aktiengesellschaft**
**Carl-Bosch-Strasse 38**
**D-6700 Ludwigshafen (DE)**

(72) Erfinder: **Kempter, Fritz Erdmann, Dr.**
**L 2, 14**
**D-6800 Mannheim 1 (DE)**
Erfinder: **Weiss, Wolfram, Dr.**
**Am Speyerweg**
**D-6704 Mutterstadt (DE)**
Erfinder: **Osterloh, Rolf, Dr.**
**Am Wehrhaus 16 a**
**D-6718 Gruenstadt (DE)**
Erfinder: **Zosel, Albrecht, Dr.**
**Ringweg 9**
**D-6940 Weinheim (DE)**

**EP 0 165 558 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die vorliegende Erfindung betrifft Überzugsmittel, die basische Stickstoffgruppierungen aufweisende Bindemittelsysteme enthalten, die durch Zusatz von Säuren wasserverdünnbar und für die kathodische Elektrotauchlackierung von Metallteilen verwendbar sind, sowie die Herstellung dieser Bindemittelsysteme.

Zur Härtung von kathodisch abscheidbaren Elektrotauchlackbindemitteln sind eine ganze Reihe von Vernetzungsverfahren vorgeschlagen worden. Die Wirksamkeit dieser Vernetzungsverfahren beruht im wesentlichen darauf, daß diese Härtungsreaktionen im basischen Milieu des abgeschiedenen Überzugsmittels keiner Säurekatalyse bedürfen.

Bindemittelsysteme, bzw. Überzugsmittel, die an sich einer säurekatalysierten Härtungsreaktion zugänglich sind, insbesondere solche, die mit Amino- und Phenoplasten als Härtungsmittel kombiniert sind, haben bisher nicht die Anwendungsbreite gefunden, die aufgrund der großen Zahl preisgünstig vorhandener Amino- und Phenoplastharze zu erwarten wäre.

Ein wesentlicher Grund dafür ist die Schwierigkeit im genannten basischen Milieu des abgeschiedenen Überzugsmittels eine ausreichend wirksame Härtung bzw. säurekatalysierte Härtung zu bewirken.

Erschwerend wirkt sich außerdem aus, daß aus technischen und — im Zusammenhang mit der Verwendung von Amino- und Phenoplastharzen als Härtungsmittel — aus chemischen Gründen gefordert wird, Überzugsmittel bereitzustellen, die einen hohen Gehalt an basischen Gruppierungen aufweisen, um Bad-pH-Werte im Neutralbereich, besser noch im schwach alkalischen Bereich zugänglich zu machen. Außerdem ist die Tatsache von Bedeutung, daß in letzter Zeit häufig aus ökonomischen Gründen der Wunsch nach niedrigeren Härtungstemperaturen geäußert wurde.

Schon zu Beginn der Entwicklung kathodisch abscheidbarer Bindemittel wurden Möglichkeiten und Verfahren zur säurekatalytischen Beeinflussung der Härtungsreaktion untersucht und vorgeschlagen. So wird in der DE-OS 2 250 042 ein Verfahren zur Säurekatalyse durch Verwendung von p-Toluolsulfonsäure als Härtungsbeschleuniger beschrieben, wobei die im Bad vorhandene Menge des Katalysators für die gemeinsame Abscheidung mit den Harzen kontrolliert wird, indem eine Eigenschaft des gehärteten Überzuges, die eine Funktion des Härtungsrades ist, überwacht wird und die Konzentration des Härtungsbeschleunigers im Bad so eingestellt wird, daß die Eigenschaften des gehärteten Films innerhalb eines vorgewählten Bereiches von Prüfdaten aufrechterhalten bleiben.

Die DE-OS 2 360 098 sieht die Verwendung von latenten Härtungskatalysatoren vor. Genannt sind Ester aromatischer Mono- und/oder Polysulfonsäuren und/oder aromatischer Mono- oder Dicarbonsäuren.

Salze oder Ester von Säuren, unter anderem auch Borsäure werden auch in den DE-OS 20 03 123, 20 65 775 und 21 42 449 vorgeschlagen.

Der DE-OS 28 05 936 ist die Verwendung von basischen Bindemittelsystemen zu entnehmen, die einen Anteil von sauren Gruppierungen enthalten. Als saure Gruppierungen sind hier jedoch andere als Carboxylgruppen nicht genannt.

Zum oben aufgezeigten Stand der Technik ist festzustellen, daß die bisher beschriebenen Maßnahmen keine optimale Säurekatalyse zulassen, da für den Fall der Verwendung niedrigmolekularer organischer Säuren wie z. B., der an sich aufgrund ihrer zu erwartenden katalytischen Wirkung geeigneten p-Toluolsulfonsäure diese nur partiell mit dem Überzugsmittel auf das Substrat gelangt, sich im Elektrotauchbad anreichert und zu Störungen in der Lackierung führt.

Das in der DE-OS 22 50 042 angewandte Verfahren versucht zwar diesem Umstand entgegenzuwirken, doch sind die hier getroffenen Maßnahmen mit einem großen technischen Aufwand verbunden und nicht für jede Verfahrensvariante bei der kathodischen Elektrotauchlackierung einsetzbar.

Für die Verwendung von Sulfonsäureestern gilt ähnliches wie für die Sulfonsäuren, da sich gezeigt hat, daß diese nicht genügend hydrolysestabil sind.

Die katalytische Wirkung von Carboxylgruppen ist ihrer Natur entsprechend, unter Berücksichtigung der oben zur Basizität der Überzüge gemachten Aussagen weniger wirkungsvoll.

Ziel der vorliegenden Erfindung ist es, die oben aufgezeigten Nachteile bekannter Systeme zu vermeiden und Bindemittel für die kathodische Elektrotauchlackierung bereitzustellen, die vorteilhaftere Einbrennbedingungen, insbesondere bei Mitverwendung konventioneller Härtungsmittel, wie Amino- und Phenoplastharzen ermöglichen.

Gegenstand der vorliegenden Erfindung sind durch Zusatz von Säuren wasserverdünnbare, kathodisch abscheidbare Überzugsmittel, die basische Stickstoffgruppierungen aufweisende Bindemittel, sowie gegebenenfalls Pigmente, Farbstoffe, Füllstoffe, Lösungsmittel, Antioxydantien, sonstige Lackhilfsmittel und/oder zusätzliche Vernetzungsmittel enthalten, die dadurch gekennzeichnet sind, daß die Bindemittel Sulfonatgruppen bzw. die Ester dieser Gruppierungen in einer Menge von 0,05 bis 3 Gew. %, bezogen auf die Gesamtmenge der Bindemittel und Vernetzungsmittel, eingebaut enthalten.

Das Bindemittel kann entweder eine Mischung aus einem basischen Stickstoffgruppierungen aufweisenden Bindemittel und einem Sulfonatgruppen enthaltenden Bindemittel oder ein Reaktionsprodukt aus einer basischen und einer Sulfonat gruppen enthaltenden Verbindung sein, wobei die basischen Stickstoffgruppierungen vorzugsweise primäre und/oder sekundäre Aminogruppen, wie sie beispielsweise durch Umsetzung eines Epoxidgruppen tragenden Harzes mit einem Di- oder Polyamin erhalten werden, sein können.

Gegenstand der vorliegenden Erfindung sind auch Verfahren zur Herstellung der Sulfonatgruppen enthaltenden Überzugsmittel, wobei z. B. ein primäre und/oder sekundäre Aminogruppen enthaltendes Harz mit einer, gegebenenfalls an der Amidogruppe alkylsubstituierten, Amidosulfonsäure unter Ammoniak- bzw. Alkylaminabspaltung umgesetzt wird, bzw. ein Sulfosäuregruppen enthaltendes Polyacrylat einem basischen Bindemittel zugesetzt wird oder das Sulfosäuregruppen enthaltende Polyacrylat mit einem basische NH-Gruppen enthaltenden Bindemittel unter Aminolyse umgesetzt wird.

Gegenstand der vorliegenden Erfindung ist außerdem die Verwendung dieser Überzugsmittel für die kathodische Elektrotauchlackierung von elektrisch leitenden Substraten.

Ihrem erfindungsgemäßen Zweck entsprechend sind die Sulfonat-Gruppierungen so eingebaut, daß sie aus dem polymeren Verband, z. B. unter den Bedingungen der Badführung bzw. Badalterung, nicht abgespalten werden können.

Über die ausgezeichnete katalytische Wirkung dieser Gruppierungen hinaus sind derartige Überzugsmittel überraschenderweise trotz ihres Gehaltes am Zwitterionen auch bei hohen Abscheidungsspannungen ausgezeichnet abscheidbar.

Gegenüber Produkten ohne erfindungsgemäße Gruppierungen werden hellere Beschichtungen, — im Falle der Vernetzung mit Aminoplastharzen ausgezeichnete Weiß- und Silber-Lacke — erhalten.

Bezüglich der Aufbaukomponenten der erfindungsgemäßen Überzugsmittel ist im einzelnen folgendes auszuführen.

Aus der Literatur sind viele Synthesemöglichkeiten mit verschiedenen Rohstoffen bekannt geworden um basische Stickstoffgruppierungen aufweisende Makromoleküle aufzubauen. Im folgenden werden verschiedene Synthesemöglichkeiten angeführt, wobei es sich jedoch im wesentlichen nur um eine beispielhafte Aufzählung handeln soll.

Als basische Stickstoffgruppierungen aufweisende Bindemittel im Sinne der Erfindung sind polymere bzw. harzartige Produkte mit primären, sekundären, tertiären und quarternären Stickstoffatomen zu verstehen, wobei Produkte mit primären und/oder sekundären Stickstoffatomen bevorzugt sind.

Die wichtigste Gruppe von Ausgangsmaterialien zur Herstellung von polymeren Körpern mit basischen Stickstoffatomen sind Epoxidgruppen tragende Verbindungen, die mit Aminen umgesetzt werden.

Die bekanntesten epoxidgruppenhaltigen Rohstoffe, deren gemeinsames Kennzeichen das Vorhandensein eines Oxiranringes ist, sind die Glycidylether von Phenolen, insbesonders von 4,4'-Bis(hydroxyphenyl)propan. Ebenso sind die Glycidylether von Phenol-Formaldehydkondensaten des Novolak-Typs, Glycidylester von aliphatischen, aromatischen oder cycloaliphatischen Mono- bzw. Polycarbonsäuren, Glycidylether von aliphatischen oder cycloaliphatischen Diolen bzw. Polyolen, Copolymerisate des (Meth)acrylsäure-glycidylesters oder Epoxidierungsprodukte von aliphatischen bzw. cycloaliphatischen Olefinen zu nennen. Eine ausführliche Beschreibung dieser Stoffklasse findet sich bei H. M. Paquin, Epoxidverbindungen und Epoxidharze, Verlag Springer 1958.

Zur Addition an Oxiranringe geeignete Amine sind z. B. primäre und sekundäre Amine, sowie deren höhere Homologe bzw. Isomere, wie z. B. Dimethylamin, Diethylamin usw. Besonders geeignet sind primäre und sekundäre Alkanolamine wie z. B. Dialkanolamin und Diisopropanolamine, außerdem Aminoalkylalkanolamine. Weiter erwähnt seien cyclische Amine wie Ethylenimin, Morpholin und Piperidin.

Zu den Verbindungen, die zu polymeren Epoxid/Amin-Addukten führen, gehören beispielsweise auch Ammoniak (vgl. DE-OS 29 14 297, DE-OS 30 08 810) und insbesondere Diamine, wie z. B. Ethylendiamin, Propan-1,3-diamin, Hexamethylendiamin, 4,9-Dioxododekan-1,12-diamin sowie Diethylentriamin (vgl. DE-OS 27 37 375).

Andere Diamine, die zur Umsetzung geeignet sind, sind primär-tertiäre oder sekundär-sekundäre Diamine (vgl. DE-OS 28 05 936). Werden, insbesondere die Amine mit primären Aminogruppen, im Überschuß eingesetzt, wobei die oxirangruppenhaltige Verbindung zudosiert und das überschüssige Amin anschließend abdestilliert wird, so kommt es zur Bildung von Epoxidharzderivaten mit primären und/oder sekundären Aminogruppen.

Sofern die genannten Epoxidharzderivate NH-Gruppen aufweisen, können sie im Anschluß an die Einführung der basischen Gruppen noch mit Mono- und/oder Dicarbonsäuren bzw. ihren Estern, mit Polyacrylat oder auch Mono- und/oder Di-Epoxidverbindungen umgesetzt werden.

Eine andere Gruppe von Makromolekülen mit basischen Stickstoffatomen wird durch Copolymerisation von geeigneten basischen Monomeren mit Hydroxyalkyl-(meth)acrylaten, vorzugsweise in Anwesenheit weiterer copolymerisierbarer Verbindungen hergestellt. Derartige basische Monomere gehören z. B. zur Gruppe der (Meth)acrylsäureester bzw. Amide, wie N,N-Dimethylaminoethyl(meth)acrylat und Dialkylaminoalkyl(meth)acrylamid mit 1 bis 10 Kohlenstoffatomen in den Alkylgruppen. Andere geeignete Monomere mit basischen Stickstoffatomen sind z. B. Vinylpyridin, N-Vinylimidazol und N-Vinylcarbazol. Auch diese Verbindungen liegen als Copolymerisat mit Hydroxyalkyl(meth)acrylaten und bevorzugt mit weiteren (Meth)acrylsäureestern, (Meth)acrylsäureamiden, Vinylaromaten wie Styrol, Vinyltoluol, α-Methylstyrol oder Gemischen dieser Monomeren vor.

Eine weitere Gruppe von Makromolekülen mit primären und sekundären Stickstoffatomen sind die

Umsetzungsprodukte von Diaminen, wie z. B. Hexamethylendiamin mit Epoxidharzen und Dicarbonsäuren bzw. Polyacrylaten, wie sie z. B. den deutschen Patentanmeldungen P 34 22 472.6 (O.Z. 0050/37171) und P 34 22 473.4 (O.Z. 0050/37172) zu entnehmen sind.

Andere geeignete Makromoleküle mit basischen Stickstoffatomen sind substituierte Oxazolidine, die z. B. durch cyclisierende Kondensation von Aminoalkoholen, wie Tris-hydroxymethylaminomethan oder 2-Amino-2-hydroxymethyl-1,3-propandiol mit aliphatischen Carbonsäuren oder carboxylgruppenhaltigen Makromolekülen erhalten werden (vgl. z. B. DE-OS 22 49 378).

Eine zusammenfassende Darstellung dieser Stoffklasse findet sich in Chemical Reviews, 1971, Vol. 71, Nr. 5, Seiten 483 bis 505.

Eine weitere Gruppe von Makromolekülen mit basischen Stickstoffatomen liefert die Reaktion von anhydridgruppenhaltigen Substanzen mit Alkanolaminen bzw. die Reaktion von Säureanhydridgruppen oder deren Halbestern mit Diaminen, die ein primäres und ein tertiäres Stickstoffatom enthalten (vgl. z. B. DE-OS 28 05 936).

Die Einführung der Sulfonatgruppen in basische Bindemittelsysteme kann, auf verschiedene Weise erfolgen, sie hängt von Aufbau und der Zusammensetzung der Überzugsmittel ab.

Es ist möglich durch Zumischen Sulfonatgruppen enthaltender Polymerer z. B. von Polyacrylaten, die copolymerisierbare Sulfonsäure-Derivate eingebaut enthalten, erfindungsgemäße Überzugsmittel herzustellen.

Solche copolymerisierbaren Verbindungen sind :
2-Acrylamido-2-methylpropansulfonsäure, 2-Acrylamido-2-decansulfonsäure, Vinylsulfonsäure, 2-Methylacrylamido-6-naphthalinsulfonsäure, sulfoniertes Methylstyrol sowie die Ester dieser Sulfonsäuren bzw. Gemische dieser Verbindungen.

Polymere mit Sulfonatgruppen, die noch andere funktionelle Gruppierungen aufweisen, können mit bereits basischen Bindemitteln umgesetzt werden. Beispielsweise können oben genannte Polyacrylate über eine Aminolyse in NH-Gruppen enthaltende Polymere eingebaut werden ; oder es können derartige Körper mit Polyaminen aminolytisch umgesetzt werden.

Eine andere Möglichkeit der Einführung von Sulfonatgruppen besteht in der direkten Addition der oben genannten ungesättigten Verbindungen an Polymere mit NH-Gruppierungen z. B. an Epoxid/Diamin-Addukte wie sie bereits genannt wurden, nach Art einer Michael-Addition.

Eine weitere Möglichkeit ist durch die unter Wasserabspaltung stattfindende Reaktion der Hydroxymethansulfonsäure mit NH-Gruppen enthaltenden Polymeren gegeben.

$$\text{Epoxid/Amin-Addukt-}NH_2 + HO\text{-}CH_2\text{-}SO_3H \longrightarrow$$
$$H_2O + \text{Epoxid/Amin-Addukt-}NH\text{-}CH_2\text{-}SO_3^{\ominus} + H^{\oplus}$$

Eine besonders bevorzugte Art des Einbaues in basische Bindermittelsysteme ist die Umsetzung von Amidosulfonsäuren mit NH-Gruppen aufweisenden Epoxid/Amin-Addukten, z. B.

$$\text{Epoxid/Amin-Addukt-}NH_2 + H\overset{R}{N}SO_3H \longrightarrow$$
$$\overset{R}{NH_2} + \text{Epoxid/Amin-Addukt-}HN\text{-}SO_3^{\ominus} + H^{\oplus}$$

worin R für H oder eine $C_1$- bis $C_4$-Alkylgruppe steht.

Für den bevorzugten Fall des Einsatzes des Epoxid/Amin-Adduktes selbst findet die Reaktion unter Abspaltung von Ammoniak etwa zwischen 140 bis 180 °C statt, wobei andere in diesem Temperaturbereich ablaufende Reaktionen z. B. die Umsetzung mit Mono- und Dicarbonsäuren parallel dazu durchgeführt werden können.

Um sicherzustellen, daß die Sulfonatgruppen in das Bindemittel vollständig eingebaut sind, ist zweckmäßigerweise auf vollständigen Umsatz, d. h. auf vollständige $NH_3$-Abspaltung zu achten. Der Gehalt an Sulfonatgruppen, bezogen auf die Gesamtmenge der Bindemittel und Vernetzungsmittel des Überzugsmittels, beträgt 0,05 bis 3,0, bevorzugt 0,1 bis 2,0, besonders bevorzugt 0,2 bis 1,5 Gew. %.

Sollten zum Zeitpunkt der Überführung der Überzugsmittel in die wäßrige Phase die erfindungsgemäßen Gruppierungen als Ester vorliegen, so werden diese praktisch vollständig zu den entsprechenden Sulfonatgruppen hydrolysiert.

Die Menge an basischer Komponente wird vorteilhafterweise so gewählt, daß die Basizität des Überzugsmittels nach Neutralisation durch Säuren z. B. Essigsäure eine ausreichende Wasserverdünnbarkeit bei pH-Werten von 6 bis 9, vorzugsweise 6,8 bis 8,5 ergibt.

Im allgemeinen haben die Bindemittelsysteme eine Aminzahl von 20 bis 150, bevorzugt 30 bis 140 mg KOH/g.

Zur Vernetzung der basischen Bindemittel werden, wenn diese nicht schon selbst in ausreichendem Maße über säurekatalysierbare Vernetzungsgruppierungen verfügen, entsprechende säurekatalysierbare Vernetzungsmittel zugesetzt.

Solche Vernetzungsmittel sind bevorzugt Amino- und Phenoplaste.

Geeignete Aminoplaste sind z. B. die Reaktionsprodukte von Harnstoffen oder Melaminen mit Aldehyden, die zuweilen mit einem Alkohol weiter verethert werden. Spezielle Beispiele für geeignete Aminoplastharzausgangskomponenten sind Harnstoff, Ethylenharnstoff, Thioharnstoff, Melamin, Benzoguanamin, Acetoguanamin und 2-Oxo-4-hydroxy-hexahydropyrimidin. Spezielle Beispiele für zur Herstellung geeigneter Aminoplastharze verwendbare Aldehyde sind Formaldehyd, Acetaldehyd und Propionaldehyd, vorzugsweise Formaldehyd. Die Aminoplastharze können in der Alkylolform eingesetzt werden; vorzugsweise werden diese Harze jedoch in Form ihrer Ether verwendet, wobei das Veretherungsmittel ein einwertiger Alkohol mit 1 bis etwa 10, vorzugsweise 1 bis 4 Kohlenstoffatomen ist. Beispiele für geeignete Aminoplastharze sind Methylolharnstoff, Dimethoxymethylolharnstoff, butylierte polymere Harnstoff-Formaldehyd-Harze, Hexamethoxymethylmelamin, methylierte polymere Melamin-Formaldehyd-Harze und butylierte polymere Melamin-Formaldehyd-Harze. Besonders gut geeignet sind z. B. niedrigmethylolierte hochveretherte Produkttypen. Aminoplastharze und Methoden zu deren Herstellung sind beispielsweise in « Encyclopedia of Polymer Science and Technology », Band 2, (1965), Seiten 1 bis 91, Interscience Publishers, beschrieben.

Phenoplastharze sind die Reaktionsprodukte von Phenolen mit Aldehyden, welche reaktive Methylolgruppen aufweisen. Die Harze können abhängig von dem bei der ersten Kondensation angewendeten Phenol/Aldehyd-Molverhältnis eine monomere oder polymere Natur aufweisen. Spezielle Beispiele für zur Herstellung der Phenoplastharze verwendbare Phenole sind Phenol, o-, m- oder p-Kresol, 2,4-Xylenol, 3,4-Xylenol, 2,5-Xylenol, Cardanol und p-tert.-Butylphenol, Bisphenole, wie Bisphenol A und Novolacke. Für diese Reaktion einsetzbare Aldehyde sind Formaldehyd, Acetaldehyd und Propionaldehyd, vorzugsweise Formaldehyd. Besonders gut brauchbare Phenoplastharze sind Polymethylolphenole, bei denen die Phenolgruppe mit einem Alkylrest (z. B. einer Methyl- oder Ethylgruppe) verethert ist. Bevorzugt zu verwenden sind Produkte, die Alkylethergruppen aufweisen bzw. solche Produkte, deren Methylolgruppen mindestens partiell mit Alkoholen (Kettenlänge $C_1$ bis $C_{10}$) verethert worden sind. Phenoplastharze und ihre Herstellungsmethoden sind beispielsweise in « Encyclopedia of Polymer Science and Technology », Band 10 (1969), Seiten 1 bis 68, Interscience Publishers, beschrieben.

Der für das erfindungsgemäße Bindemittelsystem zu verwendende Anteil an Amino- und/oder Phenoplastharz kann bis zu 45 Gew. % des Gesamtfeststoffgewichtes des Bindemittelsystems (stickstoffbasisches Bindemittel + Vernetzer) betragen.

Weitere Vernetzungsmittel, deren Härtungsverhalten sich durch saure Katalyse beeinflussen läßt, sind mehrfunktionelle Ester; solche Produkte sind in den Patentschriften EP 004090; 12463; 40867; 25554 und 25555 genannt.

Gegebenenfalls können auch die Vernetzungsmittel Sulfonatgruppen enthalten. Beispielsweise können Verbindungen, die neben Sulfonsäuregruppierungen bzw. deren Ester noch andere reaktionsfähige zur Cokondensation geeignete Gruppierungen enthalten (basische oder amidische NH-Gruppen) bei der Herstellung von Phenoplasten mitverwendet oder nachträglich eingebaut werden. Sollen Vernetzungsmittel mit basischen Gruppen eingesetzt werden, so sollte deren Menge mindestens ausreichen, um die Bildung und die Neutralisation von Sulfonatgruppen sicherzustellen.

Die Herstellung der erfindungsgemäßen Überzugsmittel erfolgt entweder durch Mischen der Komponenten bei Temperaturen, bei welchen eine einwandfreie Homogenisierung gewährleistet ist, oder durch eine partielle Reaktion zwischen den Komponenten bei Temperaturen bis 150 °C, vorzugsweise 70 bis 120 °C. Die Mischung bzw. Umsetzung erfolgt vorteilhafterweise in Lösungsmitteln, wie Alkoholen, Glykolethern, Ketonen oder deren Gemischen.

Um die erfindungsgemäßen Überzugsmittel wasserverdünnbar zu machen, werden die basischen Stickstoffatome der erfindungsgemäßen Bindemittelsysteme partiell oder vollständig mit organischen und/oder anorganischen Säuren, vorzugsweise Ameisensäure, Essigsäure, Milchsäure neutralisiert. Der Neutralisationsgrad hängt im Einzelfall vom jeweiligen Bindemittelsystem ab. Im allgemeinen wird so viel Säure zugegeben, daß das Überzugsmittel in der Verarbeitungsform bei einem pH-Wert von 6 bis 9, vorzugsweise 6,8 bis 8,5 mit Wasser verdünnt oder dispergiert werden kann.

Die Konzentration des Bindemittels in Wasser liegt im Bereich von 5 bis 25 Gew. %, vorzugsweise bei 10 bis 20 Gew. %. Die zur Verarbeitung gelangende Zubereitung des erfindungsgemäßen Überzugsmittels kann neben dem Bindemittelsystem und den gegebenenfalls eingesetzten Vernetzungskomponenten auch verschiedene übliche Zusatzstoffe, wie Pigmente, Farbstoffe, Füllstoffe, Lösungsmittel, Antioxydantien und/oder sonstige Lackhilfsmittel enthalten.

Die erfindungsgemäßen Überzugsmittel eignen sich insbesondere für die kathodische Elektrotauchlackierung von Metallteilen.

Bei der Abscheidung wird ein das erfindungsgemäße Bindemittel enthaltende wäßrige Bad des Überzugsmittels in Kontakt mit einer elektrisch leitenden Anode und einer elektrisch leitenden Kathode gebracht, wobei die Oberfläche der Kathode mit dem Überzugsmittel beschichtet wird. Man kann verschiedene elektrisch leitende Substrate beschichten, insbesondere metallische Substrate, wie Stahl, Aluminium, Kupfer und dergleichen, jedoch auch metallisierte Kunststoffe oder andere mit einem

leitfähigen Überzug versehene Stoffe, insbesondere sog. phosphatierte Stahlbleche.

Nach der Abscheidung wird der Überzug gegebenenfalls mit Wasser gespült und bei erhöhter Temperatur gehärtet. Zum Härten werden Temperaturen von 130 bis 200 °C, vorzugsweise 150 bis 190 °C verwendet. Die Härtungszeit beträgt 5 bis 30 Minuten, vorzugsweise 10 bis 25 Minuten. Die resultierenden Beschichtungen weisen ausgezeichnete Eigenschaften auf. Überraschenderweise lassen sich besonders in Kombination mit Melaminharzen als Vernetzungsmitteln mit den erfindungsgemäßen Bindemitteln hellfarbige Beschichtungen erhalten. Die Anwesenheit von eingebauten Sulfonatgruppen wirkt sich überraschenderweise auf die Korrosionsdaten nicht negativ aus.

Die in den Beispielen genannten Teile und Prozente sind, soweit nicht anders angegeben, Gewichtsteile bzw. Gewichtsprozente.

## Beispiele

Herstellung der Epoxid/Amin-Addukte

(A) 2099,0 Teile eines Diglycidylethers aus Epichlorhydrin und Bisphenol A mit einem Epoxidwert von 0,5 und 524,2 Teile eines ebensolchen Harzes mit einem Epoxidwert von 0,2 werden in 1124,0 Teilen Toluol bei 70 °C gelöst.

3481 Teile dieser Lösung werden bei 70 °C innerhalb von 2,5 Stunden 682,0 Teilen Ethylendiamin zudosiert.

Nach Zulaufende wird das überschüssige Amin durch Vakuumdestillation, zuletzt bei 190 °C weitgehend entfernt. Das Produkt weist eine Aminzahl von 210 mg KOH/g auf.

(B) 1614,6 Teile eines Diglycidylethers aus Epichlorhydrin und Bisphenol A mit einem Epoxidwert von 0,5 und 403,0 Teile eines ebensolchen Harzes mit einem Epoxidwert von 0,2 werden in 864,5 Teilen Toluol bei 70 °C gelöst.

2678,0 Teile dieser Lösung werden in 2,5 Stunden 869,2 Teilen Hexamethylendiamin bei 70 °C zudosiert. Das überschüssige Amin wird bei 150 °C im Vakuum teilweise entfernt und das Konzentrat in einem Dünnschichtverdampfer bei 190 °C und einem Druck von 0,3 Torr weiter bearbeitet.

Das Produkt hat einen Erweichungspunkt von 70 °C, einen Gesamtstickstoffgehalt von 4,7 %, wovon 1,9 % auf primäre, 2,6 % auf sekundäre und 0,2 % auf tertiäre Aminogruppen entfallen.

Herstellung erfindungsgemäßer Bindemittel

(A1) 400,0 Teile des unter (A) beschriebenen Adduktes werden mit 90,0 Teilen Dimerfettsäure (Pripol 1014(R)), 7,0 Teilen Triphenylphosphin und 80,0 Teilen Isodekanol auf 170 °C erhitzt und bei dieser Temperatur unter Entfernung des Reaktionswassers gehalten, bis eine Säurezahl von 4 mg KOH/g erreicht ist. Der Ansatz wird anschließend mit einer Mischung aus je 66,5 Teilen Butylglykol, Ethylenglykol und Toluol sowie 45 Teilen Ethanol verdünnt. Der Feststoffgehalt der Bindemittellösung beträgt 61 %.

Je 6×82 Teile dieser Bindemittellösung werden mit 16,6 Festharz-Teilen Benzoguanamin-Formaldehyd-Harz, welches mit Methanol und Ethanol verethert ist und einen Festgehalt von 98 % aufweist, z. B. ((R)Cymel 1123 der Cyanamide Inc.) abgemischt. Die Probe 0 bleibt unbehandelt (= Vergleichsprobe). Die Proben I-IV werden mit steigenden Mengen einer nachstehend beschriebenen wäßrigen Hydroxymethansulfonsäure-Lösung versetzt (vgl. Tabelle 1).

Die gut gemischten Harzproben 0-IV werden zu gleichmäßig dünnen Platten gegossen und im Hochvakuum (ca. 1 mbar) bei Raumtemperatur getrocknet. Anschließend werden Prüflinge ausgestanzt, die in einem Schwingungsviskosimeter mit parallelen Platten bei 160 und 180 °C vermessen werden. Figur 1 (160 °C) und Figur 2 (180 °C) zeigen die durch die Probe übertragene Schwingungsamplitude A als Funktion der Härtungszeit t. Die Zunahme von A bedeutet eine Erhöhung der Viskosität bzw. des Schubmoduls der Probe, d. h. eine zunehmende Vernetzung. In der Tabelle 1 sind die Zeiten angegeben, bei denen A den Wert $10^2$ erreicht.

Tabelle 1

| Probe | Hydroxymethansulfonsäure wäßrige Lösung [ml] | berechnet als Säure [%] bez. auf Festharz | t für A = $10^2$ [min] 160°C | 180°C |
|---|---|---|---|---|
| 0 | - | - | 10,3 | 2,9 |
| I | 4,00 | 0,85 | 8,3 | 2,3 |
| II | 5,90 | 1,26 | 7,4 | 1,4 |
| IIa | 5,90 | 1,26 | 6,5 | 1,2 |
| III | 7,95 | 1,69 | 4,0 | 1,5 |
| IV | 11,85 | 2,53 | 0,9 | 1,1 |

Herstellung einer Hydroxymethansulfonsäurelösung ($HO—CH_2—SO_3H$)

300,0 Teile einer wäßrigen 40 %igen Formaldehydlösung in 1233 Teilen Wasser werden bei 50 bis 55 °C unter Rühren und unter Kühlung in 45 Minuten mit 263,0 Teilen $SO_2$ begast. Die wäßrige Lösung wird mit den Harzmischungen nach Beispiel A1 gemischt.

(B1) 400,0 Teile des unter (B) beschriebenen Adduktes werden mit 55,0 Teilen Dimerfettsäure, (Pripol 1014[(R)]), 20 Teilen Stearinsäure, 7 Teilen Triphenylphosphin, 80,0 Teilen Isodecanol und 25 Teilen Toluol versetzt und auf 100 °C erhitzt; anschließend werden 2,15 Teile Amidosulfonsäure in 5 Teile $H_2O$ warm gelöst zugesetzt und in 1,5 Stunden auf 160 °C erhitzt, wobei Toluol, das zugesetzte Wasser und Teile des Reaktionswassers, sowie ab 140 °C Ammonik entfernt werden. Der Ansatz wird bei 170 °C gehalten bis eine Schmelzviskosität von 1650 mPas bei 150 °C (gemessen mit dem Epprecht Viskosimeter) erreicht ist. Die Säurezahl beträgt 6,3. Der Ansatz wird verdünnt mit einer Mischung aus je 66,5 Teilen Butylglykol, Ethylglykol, und Toluol sowie 41,5 Teilen Ethanol.

Der Feststoffgehalt beträgt 60,5 %; die Aminzahl 73 mg KOH/g. Die t-Aminzahl liegt bei 4,5 mg KOH/g.

Zur Elektrotauchlackierung werden 466 Teile des Bindemittels mit 128,0 Teilen Melaminharz (Cymel 325 der Fa. Cyanamid) und 46,0 Teilen Melaminahrz Cymel 1116, 20 Teilen Isodecanol und 8,4 Teilen Essigsäure gemischt und mit vollentsalzten Wasser auf 4 000 Teile Badvolumen mit 10 % Feststoffgehalt verdünnt und 24 Stunden bei 23 °C gerührt. Das Bad hat ein pH-Wert von 7,8, der Leitwert beträgt 1 200 [µm]. Die Abscheidung bei 300 V/2 Minuten auf als Kathode geschalteten, mit Zinkphosphat beschichteten Stahlblechen, ergibt nach dem Einbrennen (30 Minuten bei 160 °C) ca. 18 µm dicke, praktisch farblose Beschichtungen mit ausgezeichneten Elastizitäts- und Korrosionseigenschaften.

Der Umgriff (Methode Ford) beträgt 18 cm. Die Korrosionsprüfung (nach DIN 50 021) ergibt nach 20 Tagen einen Wert von 3 mm.

## Patentansprüche

1. Durch Zusatz von Säuren wasserverdünnbare, kathodisch abscheidbare Überzugsmittel, die basische Stickstoffgruppierungen aufweisende Bindemittel, sowie gegebenenfalls Pigmente, Farbstoffe, Füllstoffe, Lösungsmittel, Antioxydantien, sonstige Lackhilfsmittel und/oder zusätzliche Vernetzungsmittel enthalten, dadurch gekennzeichnet, daß die Bindemittel Sulfonatgruppen bzw. die Ester dieser Gruppierungen in einer Menge von 0,05 bis 3 Gew. %, bezogen auf die Gesamtmenge der Bindemittel und Vernetzungsmittel, eingebaut enthalten.

2. Überzugsmittel nach Anspruch 1, dadurch gekennzeichnet, daß sie als Bindemittel eine Mischung aus einem basische Stickstoffgruppierungen aufweisenden Bindemittel und einem Sulfonatgruppen enthaltenden Bindemittel enthalten.

3. Überzugsmittel nach Anspruch 1, dadurch gekennzeichnet, daß sie als Bindemittel ein Reaktionsprodukt aus einer basischen und einer Sulfonatgruppen enthaltenden Verbindung enthalten.

4. Überzugsmittel nach Anspruch 1, dadurch gekennzeichnet, daß das Bindemittel als basische Stickstoffgruppierungen primäre und/oder sekundäre Aminogruppen aufweisen.

5. Verfahren zur Herstellung eines Sulfonatgruppen enthaltenden Überzugsmittels nach Anspruch 1, dadurch gekennzeichnet, daß zur Herstellung des Bindemittels ein primäre und/oder sekundäre Aminogruppen enthaltendes Harz mit einer, gegebenenfalls alkylsubstituierten, Amidosulfonsäure unter Ammoniak- bzw. Alkylaminabspaltung umgesetzt wird.

6. Verfahren nach Anspruch 5, dadurch gekennzeichnet, daß das primäre und/oder sekundäre Aminogruppen enthaltende Harz ein Umsetzungsprodukt eines Epoxidgruppen tragenden Harzes mit einem Di- oder Polyamin ist.

7. Verfahren zur Herstellung eines Sulfonatgruppen enthaltenden Überzugsmittels nach einem der Ansprüche 1 oder 2, dadurch gekennzeichnet, daß ein Sulfosäuregruppen enthaltendes Polyacrylat einem basischen Bindemittel zugesetzt wird.

8. Verfahren nach Anspruch 7, dadurch gekennzeichnet, daß das Sulfonsäuregruppen enthaltende Polyacrylat mit einem basische NH-Gruppen enthaltenden Bindemittel unter Aminolyse umgesetzt wird.

9. Verwendung der Überzugsmittel nach einem der Ansprüche 1 bis 4 für die kathodische Elektrotauchlackierung von elektrisch leitenden Substraten.

## Claims

1. A cathodic coating agent which is rendered waterdilutable by the addition of an acid, contains a binder possessing basic nitrogen groups and may or may not contain pigments, dyes, fillers, solvents, antioxidants, other surface coating assistants and/or additional crosslinking agents, wherein the binder contains sulfonate groups or the esters of these groups in an amount of from 0.05 to 3 % by weight, based on the total amount of the binders and crosslinking agents.

2. A coating agent as claimed in claim 1, which contains, as the binder, a mixture of a binder

possessing basic nitrogen groups with a binder possessing sulfonate groups.

3. A coating agent as claimed in claim 1, which contains, as the binder, a reaction product of a basic compound with a compound containing sulfonate groups.

4. A coating agent as claimed in claim 1, wherein the binder possesses, as basic nitrogen groups, primary and/or secondary amino groups.

5. A process for the preparation of a sulfonatecontaining coating agent as claimed in claim 1, wherein, for the preparation of the binder, a resin possessing primary and/or secondary amino groups is reacted with an unsubstituted or alkyl-substituted amidosulfonic acid, with elimination of ammonia or an alkylamine.

6. A process as claimed in claim 5, wherein the resin possessing primary and/or secondary amino groups is a reaction product of an epoxide-containing resin with a di- or polyamide.

7. A process for the preparation of a sulfonatecontaining coating agent as claimed in either of claims 1 and 2, wherein a sulfo-containing polyacrylate is added to a basic binder.

8. A process as claimed in claim 7, wherein the sulfo-containing polyacrylate is reacted with a binder possessing basic NH groups, aminolysis taking place.

9. The use of a coating agent as claimed in any of claims 1 to 4 for the cathodic electrocoating of an electrically conductive substrate.

## Revendications

1. Compositions de revêtement diluables dans l'eau par addition d'acides et précipitables par voie cathodique, compositions qui contiennent des liants présentant des groupements azotés basiques, ainsi qu'éventuellement des pigments, des colorants, des charges, des solvants, des anti-oxydants, des adjuvants de laque habituels et/ou des agents de réticulation classiques, caractérisées en ce que les liants contiennent dans leur structure interne des groupements sulfonate ou les esters de tels groupements à raison de 0,05 à 3 % en poids, par rapport à la quantité totale de liants et d'agents de réticulation.

2. Compositions de revêtement selon la revendication 1, caractérisées en ce qu'elles contiennent, en tant que liants, un mélange d'un liant présentant des groupements azotés basiques et d'un liant contenant des groupements sulfonate.

3. Compositions de revêtement selon la revendication 1, caractérisées en ce qu'elles contiennent, en tant que liant, un produit de réaction d'un composé contenant des groupements basiques et d'un composé contenant des groupements sulfonate.

4. Compositions de revêtement selon la revendication 1, caractérisées en ce que le liant présente, en tant que groupements azotés basiques, des groupements amino primaires et/ou secondaires.

5. Procédé de préparation d'une composition de revêtement contenant des groupements sulfonate selon la revendication 1, caractérisé en ce que, pour préparer le liant, on fait réagir une résine contenant des groupements amino primaires et/ou secondaires avec un acide amidosulfonique éventuellement alkyl-substitué, avec élimination d'ammoniac ou d'alkylamine.

6. Procédé selon la revendication 5, caractérisé en ce que la résine contenant des groupements amino primaires et/ou secondaires est un produit de réaction d'une résine portant des groupements époxy avec une diamine ou une polyamine.

7. Procédé de préparation d'une composition de revêtement contenant des groupements sulfonate selon l'une des revendications 1 et 2, caractérisé en ce qu'un polyacrylate contenant des groupements acide sulfonique est ajouté à un liant basique.

8. Procédé selon la revendication 7, caractérisé en ce qu'on fait réagir sous aminolyse le polyacrylate contenant des groupements acide sulfonique avec un liant contenant des groupements NH basiques.

9. Utilisation des compositions de revêtement selon l'une des revendications 1 à 4 pour le trempage électrophorétique cathodique de substrats conducteurs de l'électricité.

FIG.1

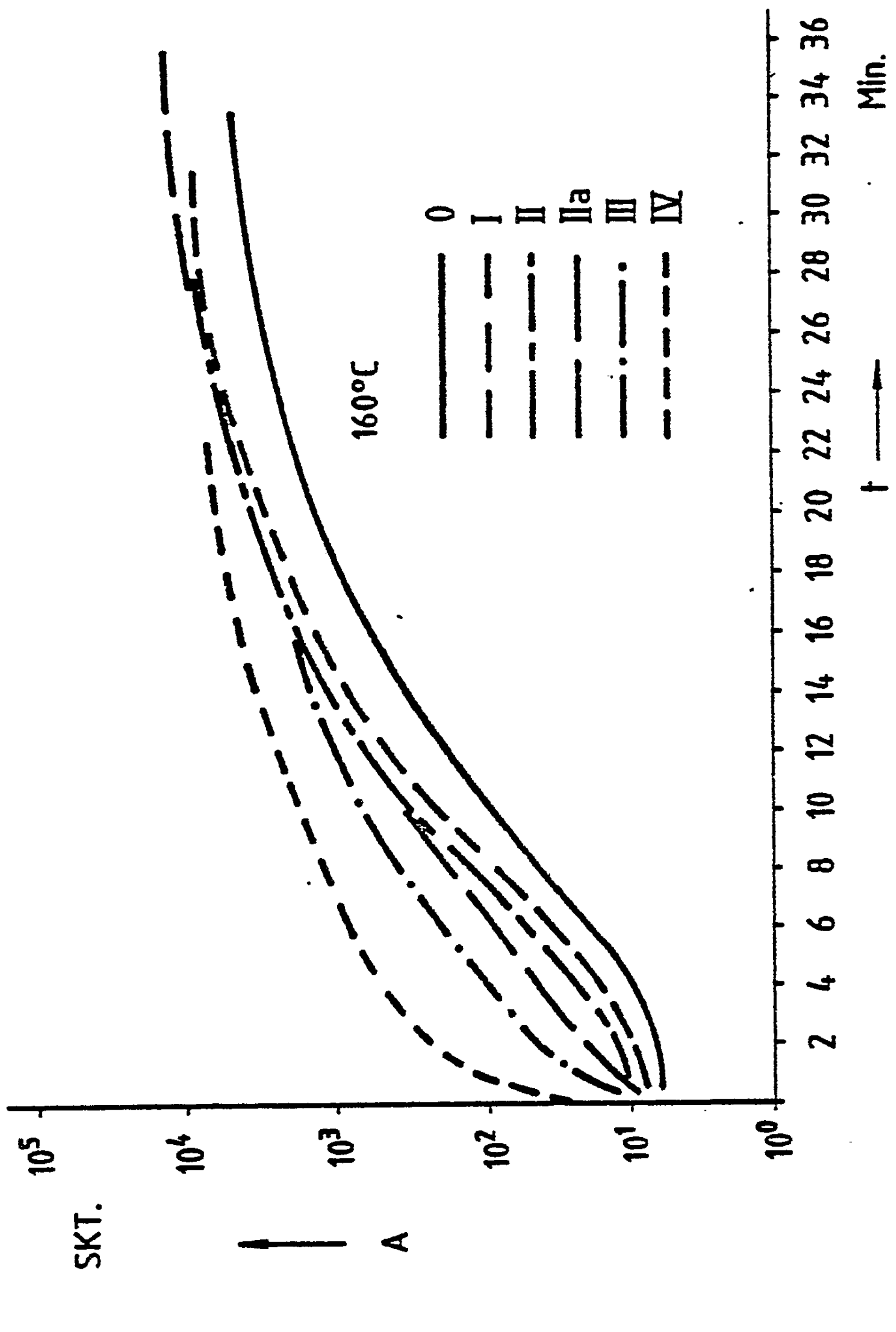
SKT.
A
$10^5$
$10^4$
$10^3$
$10^2$
$10^1$
$10^0$
160°C
0
I
II
IIa
III
IV
2 4 6 8 10 12 14 16 18 20 22 24 26 28 30 32 34 36
t
Min.

FIG. 2

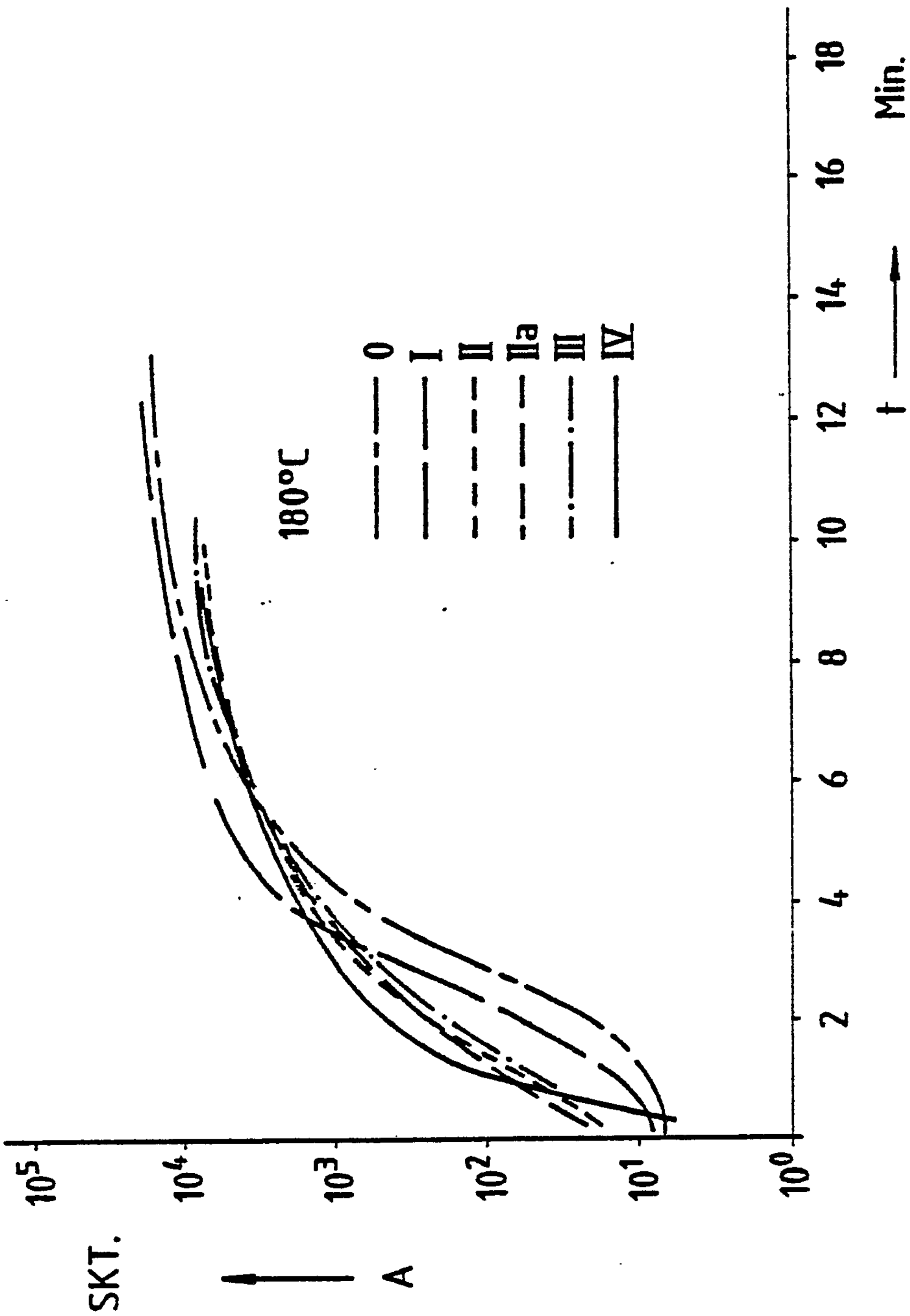
SKT.
A
$10^5$
$10^4$
$10^3$
$10^2$
$10^1$
$10^0$
180°C
0
I
II
IIa
III
IV
2
4
6
8
10
12
14
16
18
Min.
t